Europäisches Patentamt

European Patent Office

Office européen des brevets

(11) Publication number: **0 402 970**
**A1**

## (12) EUROPEAN PATENT APPLICATION

(21) Application number: **90201330.9**

(22) Date of filing: **25.05.90**

(51) Int. Cl.⁵: **H01Q 17/00, B29C 33/62**

(30) Priority: **15.06.89 IT 2087689**

(43) Date of publication of application:
**19.12.90 Bulletin 90/51**

(84) Designated Contracting States:
**CH DE ES FR GB GR IT LI SE**

(71) Applicant: **SIEMENS TELECOMUNICAZIONI S.P.A.**
**SS. 11 Padana Superiore Km. 158**
**I-20060 Cassina de Pecchi (Milano)(IT)**

(72) Inventor: **Fumagalli, Egidio**
**Corso Alpi 16**
**I-20040 Bellusco (Milano)(IT)**

(74) Representative: **Mittler, Enrico et al**
**c/o Marchi & Mittler s.r.l. Viale Lombardia, 20**
**I-20131 Milano(IT)**

(54) **Process for embodiment of absorbers for electromagnetic fields.**

(57) A process for the embodiment of electromagnetic radiation absorbers comprising the phases of manufacture of dies (16) embodied in modular component parts (17, 18, 19), Teflon covering of some surfaces of said die parts, assembly of the parts toform cavities (20) which reproduce the shapes of the absorbers (2), filling of the cavities (20) of the Teflon-coated dies (16) with a mixture consisting of the making up the absorbers (2), hardening in an oven of the mixture and subsequent disassembly of the dies (18) into their individual parts (17, 18, 19) to obtain the absorbers (2). The absorbers (2) made by the process which is the object of the present invention are used mainly in circuit modules operating in the microwave range.

FIG. 3

## Process for embodiment of absorbers for electromagnetic fields

The present invention lies in the field of the suppression of electromagnetic disturbances generated by circuit modules operating at high frequencies, e.g. in the microwave range, and specifically relates to a process for the embodiment of absorbers for electromagnetic fields.

It is known that circuits operating on high frequencies can radiate electromagnetic power in the surrounding space for various physical causes. In general some components, e.g. transistors, or particular line sections, e.g. broken slotlines, behave like actual antennas.

It has been found several times that in equipment comprising various circuit modules adjacent to each other, the electromagnetic radiations emitted by a generic circuit can disturb operation of nearby circuits unless appropriate measures are taken.

A known provision is to apply metal shields in appropriate zones of the circuit modules or between such modules to prevent their passing through the shielded zones. There is also used a system of enclosing entire circuit modules in hermetically sealed metal containers to prevent leaking of disturbances from said containers.

A shortcoming of the use of metal shields is that they reflect incident radiation according to predetermined angles. Thus part of the radiation generated can be reflected toward the circuits and also contribute to disturbance of operation. To obviate this shortcoming the use has recently spread of electromagnetic radiation absorbers capable of completely absorbing incident radiations, thus eliminating the above shortcoming.

Said absorbers take the shape best suited to their specific housing and are generally made by hardening in purpose-made dies a mixture of irondust, binder and hardener in appropriate proportions.

The manufacturing processes for absorbers known in the state of the art include in general the following phases:
- Making of metal dies which reproduce in appropriate cavities the rough form of the absorbers.
- Preparation of a pasty, liquid mixture with the above-mentoned ingredients.
- Filling of the cavities of the dies with the mixture.
- Heating of the die in an oven to harden the mixture.
- Removal of the absorber from the die.
Known manufacturing processes display several serious shortcomings which make it difficult to make absorbers.

A first shortcoming is the fact that after hardening the mixture sticks tenaciously to the walls of any metal die making removal of the absorbers therefrom difficult. This involves severe limitation of output of the known process, mainly because of the numerous breakages which occur in the absorbers upon removal thereof from the dies. In addition the dies require periodic maintenance or rebuilding.

A second shortcoming, deriving from the first, is that, removal being difficult, with known processes only absorbers with simple geometric shapes which always require further finishing can be made.

A last shortcoming is the noxiousness of the finishing operation mentioned, usually done with machine tools, due to the fact that said machine tools do not remove chips but, because of the peculiar composition of the absorbers, create a fine dust which spreads into the surrounding space and is inhaled by the operator.

Therefore the object of the present invention is to overcome the above-mentioned shortcomings and indicate a process for the embodiment of electromagnetic field absorbers including the phases of making partially modular molds; covering with Teflon (also termed teflonizing) the surfaces of said die parts which will be in contact with the absorbers to aid detachment thereof in the final phase of manufacture; assembly of the dies to form cavities with teflonized walls which reproduce the forms of the absorbers; filling of the cavities with a pasty, liquid mixture of the materials constituting the absorbers in the proper proportions; and heating of the dies to harden the mixture and disassembly of the dies into their separate parts after cooling to remove the absorbers.

The process which is the object of the invention has the basic advantage of allowing production of absorbers having the desired geometrical forms, even complex ones, with no need of further mechanical operations on the pieces removed from the dies. This is made possible by prior teflonizing of the dies which prevents sticking of the hardened mixture to the walls and eliminates all the shortcomings of the earlier methods.

The absence of mechanical finishing also eliminates the noxiousness of processing which characterized earlier methods. Another basic advantage of the process which is the object of the present invention is that it provides high output due to the nearly complete elimination of scrap. Another advantage is that the dies do not need periodic maintenance or rebuilding.

These advantages taken together provide a considerable saving in production time and costs.

Further objects and advantages of the present invention will be made clear by the following detailed description of an embodiment thereof and the annexed drawings given for purely nonlimiting explanatory purposes and wherein:

FIG. 1 shows a plan view of a device operating in the microwave range and comprising various thin film circuit modules separated by electromagnetic field absorbers made in accordance with the process which is the object of the present invention,

FIG. 2 shows an axonometric projection of the absorber represented in FIG. 1,

FIG. 3 shows a plan view of a die used for making the absorber shown in FIG. 2, and

FIG. 4 shows a cross section view along plane A-A of the die represented in FIG. 3.

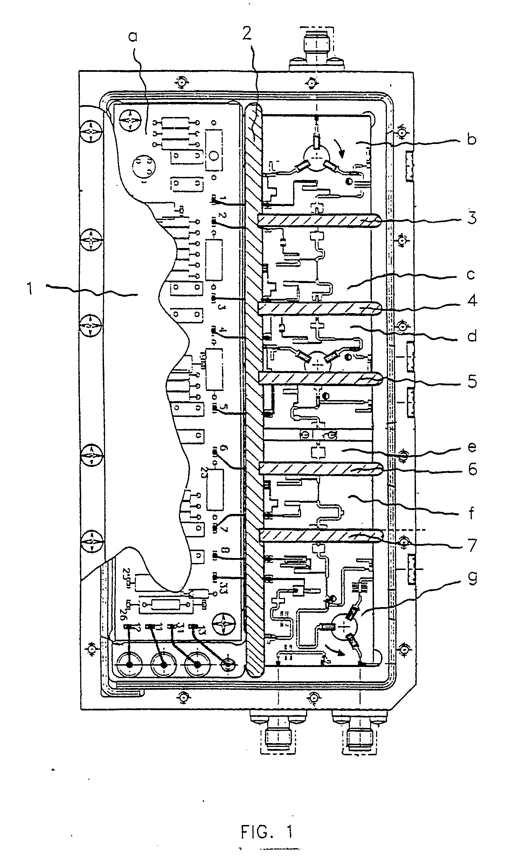

With reference to FIG. 1 reference number 1 designates a hermetically sealed metal container which encloses thin film circuit modules indicated in the figure by a, b, c, d, e, f and g, between which are placed electromagnetic field absorbers indicated by the numbers 2, 3, 4, 5, 6 and 7 respectively. The absorber 2 is inserted in two grooves made in the centre of two opposite walls of the container 1. The other absorbers are inserted in special recesses of the absorber 2 in corresponding grooves of a third wall of the container 1.

Said circuit modules are connected together electrically and comprise a functional subassembly of a telecommunications apparatus operating in the microwave range.

As stated above the absorbers 2, 3, 4, 5, 6 and 7 prevent the electromagnetic disturbances generated by the circuit modules a, b, c, d, e, f and g from interfering with proper operation of said modules. Furthermore the container 1 prevents radiation leakage.

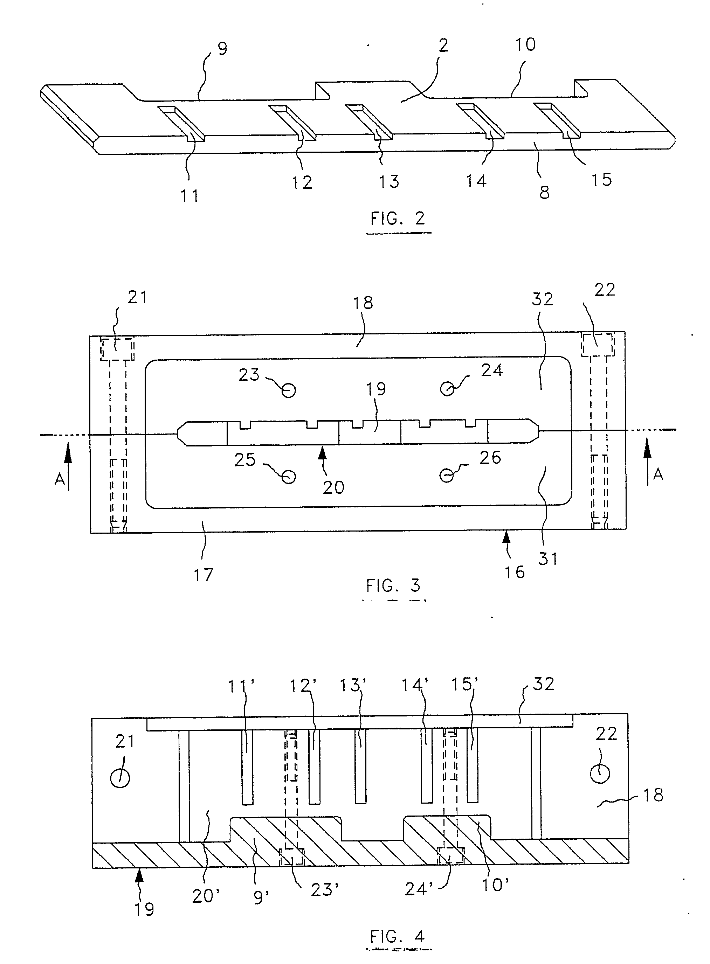

With reference to FIG. 2 the electromagnetic field absorber 2 displays at the ends a form similar to that of a small bevelled bar. In one wall of the absorber 2 there are recesses 11, 12, 13, 14 and 15 for insertion of the absorbers 3, 4, 5, 6 and 7 (FIG. 1). Said recesses start from the front face 8 and extend on said wall of the absorber without however reaching the rear face. In the rear face of the absorber 2 there are made two recesses 9 and 10 to house specific circuit components.

With reference to FIG. 3 a die 16 parallelepiped in shape comprises in its centre a cavity 20 which reproduces the exact form of the absorber 2. Said die 16 comprises two metal half-dies 17 and 18. Each half-die displays a central part indicated by reference numbers 31 and 32 respectively which is lower than the edges and better seen in FIG. 4. In addition the die 16 comprises a metal base plate 19 of which only the part beneath the cavity 20 is visible in FIG. 3. The half-dies 17 and 18 are held together by two screws 21 and 22 which pass through the side walls thereof. The baseplate 19 is fixed to the two half-dies 17 and 18 by screws (better seen in FIG. 4) placed in holes in the two half-dies and indicated by reference numbers 23, 24 and 25, 26 respectively. With reference to FIG. 4, where the same elements shown in FIG. 3 are indicated by the same reference numbers, the half-die 18, which includes the lowered zone 32, a half-cavity 20' of the cavity 20 (FIG. 3) and the baseplate 19 which has two thickened parts corresponding to the recesses 9 and 10 of the absorber 2 (FIG. 2), can be seen.

The wall of the half-cavity 20' displays projecting parts indicated by reference numbers 11', 12', 13', 14' and 15' corresponding to the recesses 11, 12, 13, 14 and 15 of the absorber 2 (FIG. 2). Two screws 23' and 24' fix the plate 19 to the half-die 18. The figure also shows a cross section of the screws 21 and 22 (FIG. 3) which connect the two half-dies 17 and 18 together.

The absorbers shown in FIG. 2 are made by a process which comprises the following phases.
- Embodiment, with reference to FIGS. 3 and 4, of the two half-dies 17 and 18 and the baseplate 19 belonging to the die 16 and which reproduce the exact shape of the absorber;
- entirely covering with Teflon the faces of the two half-dies 17 and 18 and the baseplate 19 which together contribute to defining the cavity 20 of the die 16; the teflonizing is performed in accordance with known arts consisting of spraying with a special spray-gun liquid Teflon on the surfaces involved and heating in an oven the teflonized parts of the die to secure a thin film of Teflon adhering to said surfaces;
- assembly of the two half-dies 17 and 18 and of the plate 19 to form the die 16 with the walls of the cavity 20 teflonized;
- preparation of a mixture of powdered iron, binder and hardener in appropriate proportions such as to confer thereon a pasty, liquid consistency;
- pouring of the mixture in the cavity 20 of the die 16 until it is full, i.e. to the level of the surface of the lowered part 32;
- heating of the die 16 in an oven to accelerate hardening of the mixture; and
- disassembly of the die 16 into its component parts to remove the finished absorber 2.

## Claims

1. Process for the manufacture of electromagnetic field absorbers characterized in that it consists of the phases of making a die (16) comprising individual component parts (17, 18, 19) which fit together; covering with Teflon, also termed teflonizing, at least some surfaces of said die parts; assembly of the die (16) to form a cavity (20) with teflonized walls reproducing the exact shape of an electromagnetic field absorber (2); filling of said cavity (20) with a mixture of materials in appropriate proportions for manufacture of said absorber (2); and heating of the die (16) for hardening of said mixture and subsequent disassembly of the die (16) into its individual component parts (17, 18, 19) to secure the finished absorber (2).

FIG. 1

FIG. 2

FIG. 3

FIG. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | EP-A-0314366 (THORN EMI ELECTRONICS)<br>* claims 4, 5 * | 1 | H01Q17/00<br>B29C33/62 |
| Y | INTERNATIONAL POLYMER SCIENCE AND TECHNOLOGY, vol. 12, no. 12, 1985, SHAWBURY GB pages T/24 - T/29; Hanazono: "Mould coatings to prevent fouling"<br>* page T/27 * | 1 | |
| A | DE-A-3731088 (F.S.FEHRER GUMMIHAAR-UND SCHAUMPOLSTERFABRIK)<br>* claims 1, 5 * | 1 | |
| A | DE-A-3137578 (MBB)<br>* page 5; figures 1-3 * | 1 | |
| | | | **TECHNICAL FIELDS SEARCHED (Int. Cl.5 )**<br><br>H01Q<br>B29C<br>H05K<br>H01P |

The present search report has been drawn up for all claims

| Place of search | Date of completion of the search | Examiner |
|---|---|---|
| THE HAGUE | 29 AUGUST 1990 | ANGRABEIT F.F.K. |